# EUROPÄISCHE PATENTANMELDUNG

(11) **EP 4 484 996 A1**
(43) Veröffentlichungstag der Anmeldung: **01.01.2025**
(21) Anmeldenummer: 24178383.6
(22) Anmeldetag: 28.05.2024
(51) Int. Cl.: G01S 5/12, G01S 5/02, G06V 20/20

(54) **VERFAHREN ZUR ERKENNUNG EINES HAUSHALTSGERÄTS MITTELS EINES AR-SYSTEMS**

(30) Priorität: 26.06.2023 BE 202305517
(71) Anmelder: Miele & Cie. KG, 33332 Gütersloh (DE)
(72) Erfinder: Spenst, Natalie, 33335 Gütersloh (DE); Carsten, Daniel, 33615 Bielefeld (DE); Leier, Alexander, 33378 Rheda-Wiedenbrück (DE); Schmull, Jan, 33649 Bielefeld (DE); Stankovic, Marco, 33378 Rheda-Wiedenbrück (DE)

(57) **Zusammenfassung**

Die Erfindung betrifft ein Verfahren zur Erkennung eines Haushaltsgeräts (1) mittels eines AR-Systems (3), wobei das Haushaltsgerät (1) eine UWB-Kommunikationsschnittstelle aufweist und wobei das AR-System (2) eine UWB-Kommunikationsschnittstelle aufweist, wobei das Verfahren wenigstens die Schritte aufweist:
• Erfassen (100) eines Raumabschnitts mittels des AR-Systems (3),
• Aussenden (150) eines Anfragesignals (A) mittels der UWB-Kommunikationsschnittstelle des AR-Systems (3) in den Raumausschnitt,
• Empfangen (200) des Anfragesignals (A) wenigstens seitens des Haushaltsgeräts (1) mittels dessen UWB-Kommunikationsschnittstelle,
• in Reaktion auf das Empfangen (200) des Anfragesignals (A), Aussenden (250) eines Signals (B) mittels der UWB-Kommunikationsschnittstelle des Haushaltsgeräts (1) an die UWB-Kommunikationsschnittstelle des AR-Systems (3),
• Empfangen (300) des Signals (B) seitens des AR-Systems (3) mittels dessen UWB-Kommunikationsschnittstelle,
• Bestimmen (350) der Entfernung und der Orientierung des AR-Systems (3) zum Haushaltsgerät (1) mittels des empfangenen Signals (B) und
• Zuordnen (400) des Haushaltsgeräts (1) nach Entfernung und Orientierung im erfassten Raumabschnitt relativ zum AR-System (3).

## Beschreibung

Die Erfindung betrifft ein Verfahren zur Erkennung eines Haushaltsgeräts mittels eines AR-Systems.

Zur Ausführung von bzw. zur Unterstützung bei Haushaltstätigkeiten wie beispielsweise dem Waschen, dem Trocknen, dem Reinigen wie beispielsweise dem Wischen oder Staubsaugen und dergleichen sind seit langem Haushaltsgeräte wie beispielsweise Waschmaschinen, Wäschetrockner, Waschtrockner, Nasssauger, Staubsauger und dergleichen bekannt. Dies gilt ebenso für die Küchengeräte, welche ebenfalls zu den Haushaltsgeräten zählen. So kann sich ein Benutzer beispielsweise durch ein Handrührgerät, einen Pürierstab, einen Wasserkocher und insbesondere durch Gargeräte wie beispielsweise einen Backofen, einen Dampfgarer, ein Kombigerät aus Backofen und Dampfgarer, eine Mikrowelle und dergleichen bei der Zubereitung von Speisen unterstützen lassen. Zu den Küchengeräten sind ferner beispielsweise Dunstabzugshauben, Geschirrspüler, Kühlschränke, Gefrierschränke, Gefriertruhen und dergleichen zu zählen.

Einige Haushaltsgeräte wie beispielsweise Staubsauger und Handrührgeräte werden bei Gebrauch vom Benutzer mit der Hand geführt und bewegt und sind somit als mobil verwendbar anzusehen. Andere bzw. die meisten Haushaltsgeräte wie beispielsweise Waschmaschinen, Wäschetrockner, Backöfen, Dampfgarer, Kühlschränke und dergleichen werden aufgrund ihres Verwendungszwecks aber auch aufgrund ihrer Größe und ihres Gewichts an einem bestimmten Ort im Haushalt bzw. in der Küche oder im Vorratsraum aufgestellt und verwendet und sind somit als stationär verwendbar anzusehen.

Derartige stationär verwendbare Haushaltsgeräte haben üblicherweise gemeinsam, dass sie ein äußeres Gehäuse als Außengehäuse aufweisen, welches das Haushaltsgerät nach außen im Wesentlichen umschließt und dessen einzelnen Bauteile und Elemente schützt sowie gemeinsam handhabbar macht. Innerhalb des Haushaltsgeräts wird ein Innenraum ausgebildet, welcher den Behandlungsraum darstellt und im Wesentlichen von einem inneren Gehäuse als Innengehäuse umschlossen wird. Zwischen dem Innengehäuse und dem Außengehäuse wird ein Gehäuseraum als Zwischenraum gebildet, in welchem Funktionselemente des Haushaltsgeräts wie zum Beispiel eine Steuerung bzw. eine Steuerungseinheit, eine elektrische Energieversorgung und sonstige Bauelemente angeordnet sein können, welche dem bestimmungsgemäßen Gebrauch des Haushaltsgeräts dienen. In der Tiefe von vorne, d.h. aus Sicht eines Benutzers betrachtet, schließt das Außengehäuse bzw. eine Blende in Form eines Möbelmaterials oder in Form einer Bedienblende und dergleichen mit dem Innengehäuse zusammen den Gehäuseraum ab, so dass der Gehäuseraum für den Benutzer nicht zugänglich ist.

Der Innenraum des Haushaltsgeräts weist in der Tiefe nach vorne eine Durchgangsöffnung als Zugangsöffnung auf, durch welche hindurch der Innenraum des Haushaltsgeräts für den Benutzer zugänglich ist, um zu behandelndes Gut wie beispielsweise zu waschende oder zu trocknende Wäsche, zu garende oder zu kühlende Lebensmittel oder dergleichen in den Innenraum des Haushaltsgeräts einzuführen und dort anzuordnen sowie nach erfolgter Behandlung aus dem Innenraum des Haushaltsgeräts zu entnehmen und von dort zu entfernen. Die Zugangsöffnung kann mittels eines Verschlusselements zum Beispiel in Form einer seitlich schwenkbaren Tür, einer nach unten schwenkbaren Klappe und dergleichen vom Benutzer geöffnet werden, um auf den Innenraum des Haushaltsgeräts zugreifen zu können, wie zuvor beschrieben, oder um den Innenraum des Haushaltsgeräts zu verschließen und den Behandlungsvorgang auszuführen. Ein derartiges Verschlusselement kann geschlossen ausgebildet sein oder ein Sichtfenster aufweisen, um dem Benutzer beispielsweise bei einer Waschmaschine oder bei einem Backofen einen Einblick in den geschlossenen Innenraum des Haushaltsgeräts zu ermöglichen.

Es ist heutzutage allgemein bekannt, die reale Umgebung eines Benutzers mit virtuellen Darstellungen zu einer sog. erweiterten Realität (augmented reality; kurz: AR) zu verbinden. Hierdurch soll eine computergestützte Erweiterung der Realitätswahrnehmung für den Benutzer geschaffen werden.

Diese Informationen können alle menschlichen Sinnesmodalitäten ansprechen. Häufig wird jedoch unter erweiterter Realität nur die visuelle Darstellung von Informationen verstanden, also die Ergänzung von Bildern oder Videos mit computergenerierten Zusatzinformationen oder virtuellen Objekten mittels Einblendung bzw. Überlagerung in die direkt vom Benutzer wahrgenommene reale Umgebung. Im Gegensatz zur virtuellen Realität, bei welcher der Benutzer komplett in eine virtuelle Welt eintaucht, steht bei der erweiterten Realität die Darstellung zusätzlicher Informationen in der realen Umgebung im Vordergrund.

Hierzu kann z.B. eine Mixed-Reality-Brille bzw. eine Augmented-Reality-Brille (AR-Brille) verwendet werden, welche für den Blick des Benutzers durchlässig ist, so dass dieser die reale Umgebung ungestört wahrnehmen kann. Mittels der AR-Brille können Bildelemente erzeugt und in dem Blickfeld des Benutzers eingeblendet werden, so dass diese Bildelemente vom Benutzer gemeinsam mit der realen Umgebung wahrgenommen werden können. Ebenso ist die Verwendung von Tablets oder Smartphones für AR-Anwendungen möglich, wobei in diesem Fall die reale Umgebung vor dem Tablet bzw. Smartphone mit einer Kamera erfasst und zusammen mit den virtuellen Informationen auf dem Display des Tablets bzw. Smartphones dargestellt wird. Auch AR-Brillen können eine nach vorne gerichtete Kamera aufweisen. AR-Brillen, Tablets und Smartphones können zusammen als AR-Systeme bezeichnet werden.

AR-Systeme bieten mit der eingebauten Kamera eine mögliche Erkennungsfunktion von Objekten der realen Umgebung, auch Targets genannt. Die optische Erkennung von Objekten erfordert jedoch eine direkte optische Verbindung zwischen der Kamera des AR-Systems und dem zu erkennenden Objekt, was nicht in allen Situationen gewährleistet werden kann. So kann sich der Benutzer mit dem AR-System außerhalb der optischen Sichtweite des zu erkennenden Objekts befinden, beispielsweise außerhalb des Raums des zu erkennenden Objekts. Auch kann das zu erkennende Objekt, beispielsweise bei Annäherung der Person aus einem spitzen Winkel zum Objekt, oder bei Verdeckung des Objekts durch andere Objekte und bzw. oder Personen, nicht ausreichend optisch mit der Kamera des AR-Systems zu erfassen sein, um erkannt zu werden.

Die Verwendung von AR kann auch im Haushalt und insbesondere in der Küche erfolgen, um den Benutzer als Träger einer AR-Brille bzw. als Nutzer eines Tablets oder Smartphones bei der Führung des Haushalts sowie beim Kochen zu unterstützen. Beispielsweise können Statusinformationen eines Haushaltsgeräts wie die Restlaufzeit eines Behandlungsprogramm über das jeweilige Haushaltsgerät auf dem Display des AR-Systems eingeblendet werden. Auch können beispielsweise aktive Haushaltsgeräte gekennzeichnet werden, um sie von inaktiven Haushaltsgeräten zu unterscheiden. Dies kann sowohl für mobil verwendbare als auch für stationär verwendbare Haushaltsgeräte erfolgen.

Dabei kann die optische Erkennung von Haushaltsgeräten gerade schwierig sein, da die häufig sehr glänzende oder unzureichend detaillierte Oberfläche der Hausgeräte eine eindeutige optische Erkennung für ein AR-System erschweren kann, besonders bei schwachen oder ungünstigen Lichtverhältnissen. Auch können verschiedene Typen von Haushaltsgeräten nach außen sehr ähnlich erscheinen, wie beispielsweise Backöfen und Dampfgarer, was die optische Unterscheidung ebenfalls erschweren kann. Dies kann zu fehlerhaften optischen Erkennungen - der Backofen, auf welchen das AR-System gerichtet ist, wird als Dampfgarer erkannt - führen, so dass die virtuell ergänzten Informationen nicht zum vermeintlich erkannten Haushaltsgerät passen und den Benutzer verwirren.

Auch kann die optische Erkennung von Haushaltsgeräten grundsätzlich gar nicht möglich sein, falls das zu erkennende Haushaltsgerät wie beispielweise ein Geschirrspüler oder ein Kühlschrank hinter einer Möbelfront eingebaut ist und somit vollständig bzw. vollflächig von der Möbelfront verdeckt wird.

Es ist auch bekannt, dass AR-Systeme häufig Bluetooth-Chips besitzen, die zur drahtlosen Kommunikation genutzt werden können. Die Bluetooth-Funktion kann zwar drahtlose Verbindungen zu Hausgeräten aufbauen, jedoch kann die drahtlose Kommunikationsverbindung das Haushaltsgerät, auf welches mittels des AR-Systems gerade geschaut wird, nicht erkennen.

Es kann also bisher dazu kommen, dass das AR-System das Haushaltsgerät entweder gar nicht oder sogar falsch erkennt.

Der Erfindung stellt sich somit das Problem, die Erkennung von Haushaltsgeräten mittels AR-Systemen zu verbessern. Dies soll möglichst einfach, kostengünstig und bzw. oder zuverlässig erfolgen. Zumindest soll eine Alternative zu den bekannten Möglichkeiten geschaffen werden.

Erfindungsgemäß wird dieses Problem durch ein Verfahren, durch ein System, durch ein Haushaltsgerät sowie durch ein AR-System mit den Merkmalen der unabhängigen Ansprüche gelöst. Vorteilhafte Ausgestaltungen und Weiterbildungen der Erfindung ergeben sich aus den nachfolgenden abhängigen Ansprüchen.

Somit betrifft die Erfindung ein Verfahren zur Erkennung eines Haushaltsgeräts mittels eines AR-Systems, wobei das Haushaltsgerät eine UWB-Kommunikationsschnittstelle und das AR-System eine UWB-Kommunikationsschnittstelle aufweist, wobei das Verfahren wenigstens die Schritte aufweist:
Erfassen eines Raumabschnitts mittels des AR-Systems,
Aussenden eines Anfragesignals mittels der UWB-Kommunikationsschnittstelle des AR-Systems in den Raumausschnitt,
Empfangen des Anfragesignals wenigstens seitens des Haushaltsgeräts mittels dessen UWB-Kommunikationsschnittstelle,
in Reaktion auf das Empfangen des Anfragesignals, Aussenden eines Signals mittels der UWB-Kommunikationsschnittstelle des Haushaltsgeräts an die UWB-Kommunikationsschnittstelle des AR-Systems,
Empfangen des Signals seitens des AR-Systems mittels dessen UWB-Kommunikationsschnittstelle,
Bestimmen der Entfernung und der Orientierung des AR-Systems zum Haushaltsgerät mittels des empfangenen Signals und
Zuordnen des Haushaltsgeräts nach Entfernung und Orientierung im erfassten Raumabschnitt relativ zum AR-System.

Der Erfindung liegt der Gedanke zugrunde, dass UWB-Signale bzw. eine UWB-Kommunikation sowohl eine Bestimmung der Entfernung vom Empfänger zum Sender als auch eine Bestimmung der Orientierung vom Empfänger zum Sender ermöglichen kann.

UWB steht für Ultra Wideband und beschreibt die Verwendung eines breitbandigen, min. 500 MHz breiten, Funksignals in einem Frequenzbereich von 3,1 GHz bis 10,6 GHz. Die erzeugten Funksignale liegen zeitlich im Nanosekundenbereich. Daher lassen sich hohe Datenraten erzeugen, aber auch Laufzeitmessungen vornehmen, wodurch präzise Abstandsmessungen zwischen zwei UWB-Teilnehmern kleiner 10 cm möglich sind und je nach Antennendesign bzw. bei Verwendung mehrerer Antennen über einen Laufzeitunterschied auch Richtungen der Funksignale mit Genauigkeiten um die 3° bestimmt werden können. Typische Messverfahren sind hier das Two Way Ranging und die PDoA (Phasendifferenz der angekommenen Signale).

Als technische Basis kann auf IEEE802.15.4z gesetzt werden. Es handelt sich um ein Funkprotokoll für UWB-Kommunikation, das nur eine geringe spektrale Leistung verwenden darf. Über die geringe spektrale Leistung ist es reichweitenreduziert. Durch die hohe Bandbreite (500 MHz) sind sehr kurze Pulse möglich, die für genaue Laufzeitmessungen verwendet werden können.

Entsprechend kann erfindungsgemäß ein AR-System alle UWB-fähigen Haushaltsgeräte im aktuellen Sichtbereich des AR-Systems mittels eines UWB-Signals auffordern, dem AR-System ein UWB-Signal zurückzusenden. Das seitens des UWB-Systems erfasste UWB-Signal kann dann nach Entfernung und Orientierung ausgewertet und so der Sender des UWB-Signals im vom AR-System erfassten Raumbereich genau lokalisiert werden. Dies kann auch für mehrere Haushaltsgeräte parallel erfolgen, um diese voneinander zu unterscheiden.

Dies kann eine Zuordnung von Haushaltsgeräten seitens des AR-Systems in dessen Sichtbereich unterstützen oder überhaupt erst möglich machen, beispielsweise bei vollintegrierten Haushaltsgeräten hinter geschlossenen Möbelfronten.

In jedem Fall kann hierdurch zumindest überhaupt ein Haushaltsgerät als solches sicher und verlässlich erkannt werden. Nähere Unterscheidungen von verschiedenen Haushaltsgeräten sowie nähere Informationen zum erkannten Haushaltsgerät und dessen Betrieb können dann zusätzlich übertragen werden, wie nachfolgend näher beschrieben wird.

Gemäß einem Aspekt der Erfindung ist das Signal des Haushaltsgeräts ein Erkennungssignal des Haushaltsgeräts, wobei das Verfahren ferner die weiteren Schritte nach dem Empfangen des Erkennungssignals aufweist:
Vergleichen einer Erkennungsinformation des empfangenen Erkennungssignals mit vorbestimmten Erkennungsinformationen wenigstens des Haushaltsgeräts und,
bei übereinstimmenden Erkennungsinformationen: Erkennen des Haushaltsgeräts seitens des AR-Systems.

Somit kann mit der Erkennungsinformation im Signal vom Haushaltsgerät zum AR-System eine zusätzliche Funktion geschaffen werden, um das Haushaltsgerät näher zu identifizieren. Auf diese Art und Weise kann nicht nur ein Haushaltsgerät als solches, sondern ein konkretes Haushaltsgerät bzw. ein konkreter Typ von Haushaltsgeräten erkannt werden.

Gemäß einem weiteren Aspekt der Erfindung weist das Verfahren ferner den weiteren Schritt nach dem Erkennen des Haushaltsgeräts auf:
Einblenden von gerätespezifischen Informationen des Haushaltsgeräts mittels des AR-Systems am Ort des Haushaltsgeräts.

Hierdurch kann der Nutzen für den Benutzers des AR-Systems weiter gesteigert werden, indem im AR-System wie beispielsweise in einer AR-Brille der realen Ansicht des Haushaltsgeräts gerätespezifische Informationen des Haushaltsgeräts eingeblendet bzw. diesem überlagert werden. Hierdurch können diese Informationen am Ort des Haushaltsgeräts dargestellt und somit intuitiv vom Benutzer dem Haushaltsgerät zugeordnet werden.

Gemäß einem weiteren Aspekt der Erfindung umfassen die gerätespezifischen Informationen des Haushaltsgeräts:
den Gerätetyp des Haushaltsgeräts,
den Hersteller des Haushaltsgeräts,
Leistungsdaten des Haushaltsgeräts und bzw. oder
den Funktionsumfang des Haushaltsgeräts.

Der Gerätetyp kann eine grundlegende Information sein, ob das Haushaltsgerät ein Backofen, ein Dampfgarer oder dergleichen ist. Der Gerätetyp kann aber auch zusätzlich oder alternativ eine Typenbezeichnung bzw. eine Produktbezeichnung des Haushaltsgeräts sein. Der Hersteller kann die Unternehmensbezeichnung des Herstellers des Haushaltsgeräts sein. Die Leistungsdaten können beispielsweise dessen Energieeffizienzklasse, dessen Leistung, dessen Leistungsverbrauch oder dergleichen sein. Der Funktionsumfang können beispielsweise die wählbaren Behandlungsprogramme wie verschiedene Waschprogramme sein. Dies alles kann für den Benutzer informativ sein.

Gemäß einem weiteren Aspekt der Erfindung umfassen die gerätespezifischen Informationen des Haushaltsgeräts ferner:
eine Hervorhebung des Haushaltsgeräts im erfassten Raumabschnitt.

Dies kann beispielsweise durch eine eingeblendete Umrahmung des Haushaltsgeräts im erfassten Raumabschnitt erfolgen. In jedem Fall kann dies dem Benutzer die Wahrnehmung des Haushaltsgeräts sowie die Zuordnung dessen eingeblendeter Informationen erleichtern.

Gemäß einem weiteren Aspekt der Erfindung weist das Verfahren ferner die weiteren Schritte nach dem Empfangen des Erkennungssignals auf:
Übermitteln von betriebsspezifischen Informationen vom Haushaltsgerät an das AR-System und
Einblenden der betriebsspezifischen Informationen des Haushaltsgeräts mittels des AR-Systems am Ort des Haushaltsgeräts.

Dies kann es ermöglichen, Informationen des Haushaltsgeräts im AR-System einzublenden, welche sich auf den aktuellen Zustand bzw. auf den aktuellen Betrieb des Haushaltsgeräts beziehen. Hierdurch können auch derartige Informationen am Ort des Haushaltsgeräts dargestellt und somit intuitiv vom Benutzer dem Haushaltsgerät zugeordnet werden.

Gemäß einem weiteren Aspekt der Erfindung umfassen die betriebsspezifischen Informationen des Haushaltsgeräts:
einen Betriebszustand des Haushaltsgeräts,
den Typ eines laufenden Behandlungsvorgangs des Haushaltsgeräts,
eine Parametrierung eines laufenden Behandlungsvorgangs des Haushaltsgeräts,
einen Messwert eines laufenden Behandlungsvorgangs des Haushaltsgeräts und bzw. oder
eine Restlaufzeit eines laufenden Behandlungsvorgangs des Haushaltsgeräts.

Somit kann im einfachsten Fall dem Benutzer im AR-System angezeigt werden, ob das betrachtete Haushaltsgerät überhaupt läuft, d.h. in Betrieb ist, oder nicht. Zusätzlich oder alternativ können die Art des Betriebs bzw. des Behandlungsvorgangs wie beispielsweise ein Kochwaschprogramm, ein Feinwaschprogramm oder dergleichen und bzw. oder dessen Parametrierung wie beispielsweise maximale Wassertemperatur, maximale Umdrehungszahl der Trommel und dergleichen angezeigt werden. Zusätzlich oder alternativ können auch aktuelle Messwerte wie beispielsweise eine aktuelle Wassertemperatur, eine aktuelle Umdrehungszahl der Trommel, ein aktueller Schritt im Programmablauf wie Schleudern, Abpumpen und dergleichen angezeigt werden. Insbesondere die Restlaufzeit und bzw. oder die bisher abgelaufene Zeit des Behandlungsvorgangs kann für den Benutzer nützlich sein.

Gemäß einem weiteren Aspekt der Erfindung unterscheidet sich die Hervorhebung des Haushaltsgeräts bei aktiviertem Haushaltsgerät von der Hervorhebung des Haushaltsgeräts bei deaktiviertem Haushaltsgerät. Dies kann es dem Benutzer direkt und intuitiv verständlich machen, ob das betrachtete Haushaltsgerät im Betrieb ist oder nicht. Beispielsweise können unterschiedliche Farben, beispielsweise grün für ein nicht-betriebenes Haushaltsgerät und rot für ein im Betrieb befindliches Haushaltsgerät, oder umgekehrt, verwendet werden. Alternativ oder zusätzlich kann eine stehende Markierung ein nicht-betriebenes Haushaltsgerät und eine pulsierende Markierung ein im Betrieb befindliches Haushaltsgerät kennzeichnen. Diese Markierung kann in jedem Fall als Umrandung des betrachteten Haushaltsgeräts eingeblendet werden. Dies kann für den Benutzer besonders intuitiv verständlich sein.

Gemäß einem weiteren Aspekt der Erfindung weist das Haushaltsgerät einen Behandlungsraum mit wenigstens einer Bilderfassungseinheit, vorzugsweise einer Kamera, auf, welche auf den Behandlungsraum gerichtet ist, wobei der Behandlungsraum des Haushaltsgeräts vorzugsweise ferner eine Beleuchtungseinheit aufweist, welche auf den Behandlungsraum gerichtet ist, wobei das Einblenden der betriebsspezifischen Informationen des Haushaltsgeräts ein Einblenden eines erfassten Bildes des, vorzugsweise beleuchteten, Behandlungsraums umfasst.

Dies kann eine zusätzliche und sehr nützliche Information für den Benutzer darstellen, welche bildlich einfacher und intuitiver zu erfassen sein kann als eine andere Darstellung. Hierdurch kann beispielsweise der Blick in den Innenraum eines Kühlschranks ermöglicht werden, um die Bevorratung des Kühlschranks optisch zu prüfen, ohne des Kühlschrank hierzu öffnen zu müssen. Dies kann aber auch für den Garraum eines Backofens verwendet werden.

Dabei eine Beleuchtung des Innenraums bzw. des Behandlungsraums vorzusehen kann die Bilderfassung dort unterstützen, falls das Verschlusselement des Haushaltsgeräts wie beispielsweise bei einem Backofen ein Sichtfenster aufweist, oder die Bilderfassung überhaupt erst ermöglichen, falls das Verschlusselement des Haushaltsgeräts wie beispielsweise bei einem Kühlschrank geschlossen ausgebildet ist.

Gemäß einem weiteren Aspekt der Erfindung weist das Verfahren ferner die weiteren Schritte nach dem Einblenden von Informationen auf:
Aussenden eines Hinweissignals mittels der UWB-Kommunikationsschnittstelle des Haushaltsgeräts an die UWB-Kommunikationsschnittstelle des AR-Systems,
Empfangen des Hinweissignals mittels der UWB-Kommunikationsschnittstelle des AR-Systems und
Darstellen einer Hinweisinformation mittels des AR-Systems basierend auf dem empfangenen Hinweissignal.

Auf diese Art und Weise kann ein zuvor erkanntes Haushaltsgerät die Aufmerksamkeit des Benutzers anfordern, falls dies erforderlich bzw. zweckmäßig ist. Hierdurch kann ein anwesender Benutzer beispielsweise auf einen abgeschlossenen Behandlungsvorgang aufmerksam gemacht werden, um beispielsweise die Wäsche oder das Gargut zu entnehmen. Auch kann dies eine Aufforderung des Haushaltsgeräts darstellen, einen Schritt im laufenden Behandlungsvorgang seitens des Benutzers vorzunehmen, wie nachfolgend näher beschrieben werden wird.

Gemäß einem weiteren Aspekt der Erfindung umfasst die Hinweisinformation:
einen vom Benutzer vorzunehmenden Schritt in einem Behandlungsablauf des Haushaltsgeräts und bzw. oder
eine vom Benutzer vorzunehmende Parametrierung in einem Behandlungsablauf des Haushaltsgeräts.

Dies kann den Benutzer zur jeweiligen Handlung veranlassen und damit für den Benutzer intuitiv verständlich sein.

Gemäß einem weiteren Aspekt der Erfindung befindet sich das Haushaltsgerät beim Aussenden des Hinweissignals außerhalb des Raumabschnitts, welcher vom AR-System in diesem Moment erfasst wird. Dies kann die Aufmerksamkeit des Benutzers auf das Haushaltsgerät lenken, wenn der Benutzer das AR-System gerade woanders hin richtet.

Die vorliegende Erfindung betrifft auch ein System mit einem Haushaltsgerät mit einer UWB-Kommunikationsschnittstelle und einem AR-System mit einer UWB-Kommunikationsschnittstelle, welche ausgebildet und eingerichtet sind, gemeinsam ein Verfahren wie zuvor beschrieben auszuführen. Hierdurch kann ein System zur Verfügung stellt werden, um das erfindungsgemäße Verfahren umzusetzen und zu nutzen.

Die Erfindung betrifft ferner ein Haushaltsgerät mit einer UWB-Kommunikationsschnittstelle zur Verwendung in einem System wie zuvor beschrieben. Hierdurch kann ein Haushaltsgerät zur Verfügung stellt werden, um das erfindungsgemäße System umzusetzen und zu nutzen.

Die Erfindung betrifft des Weiteren ein AR-System mit einer UWB-Kommunikationsschnittstelle zur Verwendung in einem System wie zuvor beschrieben. Hierdurch kann ein AR-System zur Verfügung stellt werden, um das erfindungsgemäße System umzusetzen und zu nutzen.

Mit anderen Worten kann erfindungsgemäß durch die Verbindung von AR-System und UWB die Erkennung des Hausgerätes durch das AR-System bei unzureichenden Sichtverhältnissen verbessert werden, beispielsweise bei direktem/blendenden Licht auf das Hausgerät und bzw. oder auf die Kamera des AR-Systems, bei zu geringer Beleuchtung, beispielsweise am Abend oder Morgen, falls das Hausgerät durch zu wenige Details schwer von anderen Geräten zu unterscheiden bzw. für das AR-System zu identifizieren ist oder falls sich das Hausgerät sich hinter einer Möbelfront befindet.

Das AR-System wiederum bietet dem Nutzer vielerlei zusätzliche Möglichkeiten für eine Erweiterung der Anzeige des Hausgeräts. Gerade in vollintegrierten Geräten ohne Sichtfenster fehlt eine direkte Sicht in den Innenraum oder auf den aktuellen Zustand (Restlaufzeit etc.).

Die genannten technischen Probleme werden erfindungsgemäß durch die zusätzliche Kommunikation von AR-Systemen und Hausgeräten mit UWB gelöst. Erfindungsgemäß weist somit sowohl das Hausgerät einen UWB-Chip als auch das AR-System (z.B. Smartphone, vorzugsweise AR-Brille) einen UWB-Chip auf.

Die Kombination der UWB-Kommunikation mit dem AR-System kann dem AR-System eindeutig "sagen", auf welches Hausgerät gerade geschaut wird und in welchem Winkel es betrachtet wird. Dies ist auch möglich hinter Möbelfronten und bei mehreren gleichartigen Geräten, die für eine Kamera allein nicht eindeutig zu unterscheiden sind (Backofen und Dampfgarer).

Der Nutzer schaut mit dem AR-System auf ein Hausgerät, welches einen UWB-Chip besitzt und dem AR-System bereits bekannt ist. Der UWB-Chip erkennt durch die präzise Winkel- und Entfernungsmessung das Hausgerät, auf das geschaut wird. Das Hausgerät kann sich nun mithilfe von UWB bei dem AR-System identifizieren und die Erkennung bestätigen. Nachdem per UWB das Hausgerät und seine genaue Position identifiziert wurde, kann nun mithilfe der Kamera eine präzise AR-Anwendung auf das Hausgerät projiziert werden. Die folgenden Beispiele sind nur mithilfe von UWB möglich, da auch der Zustand des identifizierten Hausgeräts über UWB kommuniziert wird, was allein über die Kamera des AR-Systems nicht möglich ist.

### Hausgerät mit Möbelfront:

- Das Hausgerät (bspw. ein vollintegrierter Geschirrspüler) wird mithilfe von UWB im AR-System eindeutig erkannt. Schaut der Benutzer dann über das AR-System auf das Hausgerät, so werden Geräteinformationen, z.B. eine Restlaufzeit, eingeblendet.
- Schaut der Benutzer über das AR-System auf den Backofen, wird ein Bild der Garraumkamera über UWB übertragen und im AR-System auf die Hausgeräteoberfläche gelegt. Durch die Winkelerkennung des UWB-Chips kann das Bild auch so gerechnet werden, dass der Benutzer einen Blick von der Seite oder schräg von oben dargestellt bekommt.
- Aktive Hausgeräte werden durch das AR-System angezeigt, z.B. durch leuchtende oder blinkende Umrandungen um die Möbelfront herum.
- Ein Nutzer schaut mit seinem AR-System auf den Kühlschrank. Über die eingebauten Kameras des Kühlschranks wird dem Benutzer ein Bild des Kühlschrankinhalts im AR-System geboten, das dort auf der Front des Kühlschranks erscheint, so als ob der Benutzer durch die Kühlschranktür schauen würde. Dabei wird die Innenraumbeleuchtung eingeschaltet. Der Benutzer muss den Kühlschrank nicht öffnen und spart so Energie. Der Kühlschrank zeigt dem Benutzer ein zuletzt gespeichertes Bild, sofern die Kühlschranktür in der Zwischenzeit nicht geöffnet wurde (erkannt über Türkontakt).

### Cook-Assist:

Während ein Cook-Assist läuft, zeigt das AR-System dem Benutzer an, wo der nächste Schritt im Kochprozess zu tun ist.
- Über UWB weiß das AR-System genau, wo welches Hausgerät ist und wo der Benutzer hingucken muss.
- Wenn ein Küchengerät die Aufmerksamkeit des Benutzers benötigt, kommuniziert das Hausgerät durch UWB und das AR-System kann den Benutzer visuell darauf hinweisen.
- Das AR-System kann dem Benutzer bestimmte Einstellungen am Hausgerät zeigen, die der Benutzer im nächsten Schritt benötigt, indem der Schritt über UWB an das AR-System übertragen wird und die Funktion vom AR-System auf das Hausgerät projiziert wird.

### Schlechte Sichtverhältnisse:

Im Falle einer unzureichenden Beleuchtung z.B. durch Blendung oder schwaches Licht, kann die Kamera des AR-Systems eine eindeutige Erkennung nicht gewährleisten. Hier bietet UWB eine Lösung. Durch die Kommunikation mit dem Hausgerät wird es eindeutig identifiziert und die Position im Raum erkannt. Das AR-System kann somit trotz unzureichender Beleuchtung seine Anwendungen präzise ausführen.

In jedem Fall bietet die Erweiterung der optischen Erkennung der AR-Systeme durch die UWB-Kommunikation mit dem Hausgerät einen weiteren Erkennungskanal, der nicht nur identifiziert, sondern auch die Position des Hausgeräts kennt und mit ihm kommunizieren kann. Somit sind auch ohne direkte Sichtverbindung eine Erkennung des Hausgeräts und die weitere Ausführung von AR-Anwendungen zuverlässig möglich. Die UWB-Kommunikation ist hier für das Kamerasystem des AR-Systems eine zusätzliche Bestätigung bei der Erkennung. Bluetooth fehlt die Fähigkeit, die Position des verbundenen Geräts zu bestimmen. Somit kann die AR-Anwendung hiermit nicht positionsgenau auf das Hausgerät projiziert werden.

Zwei Ausführungsbeispiele der Erfindung sind in den Zeichnungen rein schematisch dargestellt und werden nachfolgend näher beschrieben. Es zeigt
- Figur 1: eine Darstellung eines erfindungsgemäßen Systems bestehend aus einem erfindungsgemäßen Haushaltsgerät in Form eines vollintegrierten Geschirrspülers und mehreren erfindungsgemäßen AR-Systemen in Form eines Smartphones und einer AR-Brille zur Ausführung eines erfindungsgemäßen Verfahrens;
- Figur 2: eine Darstellung eines erfindungsgemäßen Systems bestehend aus einem erfindungsgemäßen Haushaltsgerät in Form eines Backofens sowie einem erfindungsgemäßen Haushaltsgerät in Form eines Dampfgarers und mehreren erfindungsgemäßen AR-Systemen in Form eines Smartphones und einer AR-Brille zur Ausführung des erfindungsgemäßen Verfahrens; und
- Figur 3: ein Ablaufdiagramm des erfindungsgemäßen Verfahrens.

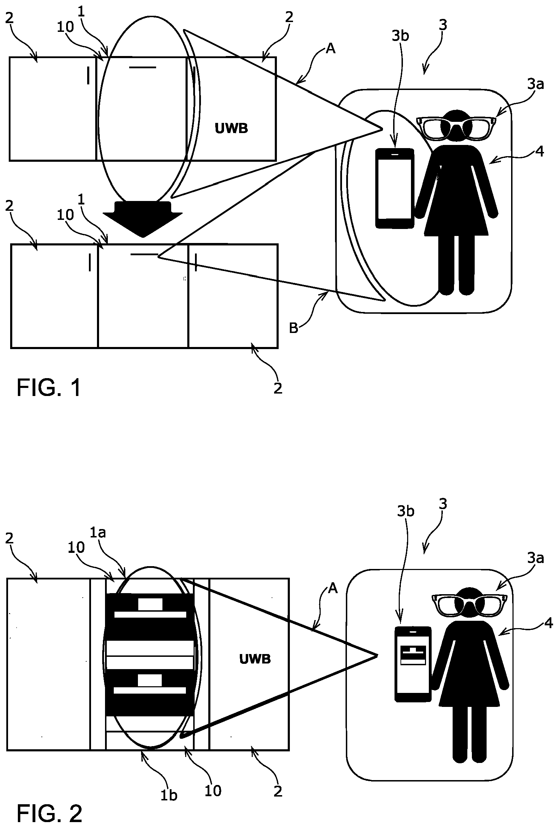

Figur 1 zeigt eine Darstellung eines erfindungsgemäßen Systems bestehend aus einem erfindungsgemäßen Haushaltsgerät 1 in Form eines vollintegrierten Geschirrspülers 1 und mehreren erfindungsgemäßen AR-Systemen 3 in Form eines Smartphones 3b und einer AR-Brille 3a zur Ausführung eines erfindungsgemäßen Verfahrens. Das Haushaltsgerät 1 kann auch als Behandlungsgerät 1 bezeichnet werden.

Eine Küchenzeile weist den vollintegrierten Geschirrspüler 1 auf, welcher nach vorne, d.h. zu einem Benutzer hin, vollständig bzw. vollflächig von einer Möbelblende 10 abgeschlossen bzw. verdeckt wird. Der Geschirrspüler 1 ist somit nach außen hin optisch nicht zu erkennen. Der Geschirrspüler 1 wird zu beiden Seiten von Küchenmöbeln 2 bzw. von Küchenschränken 2 umgeben.

Nähert sich nun eine Person als Benutzer 4 mit einem AR-System 3 (Augmented-Reality-System), wie beispielsweise einer AR-Brille 3a und bzw. oder einem Smartphone 3b, der Küchenzeile und richtet das AR-System 3 bzw. dessen Kamera auf die Küchenzeile, so kann der vollintegrierte Geschirrspüler 1 aufgrund der Möbelblende 10 optisch vom AR-System 3 nicht aus den Bilddaten erkannt werden. Entsprechend können vom AR-System 3 keine AR-Funktionen für den vollintegrierten Geschirrspüler 1 zur Verfügung gestellt werden.

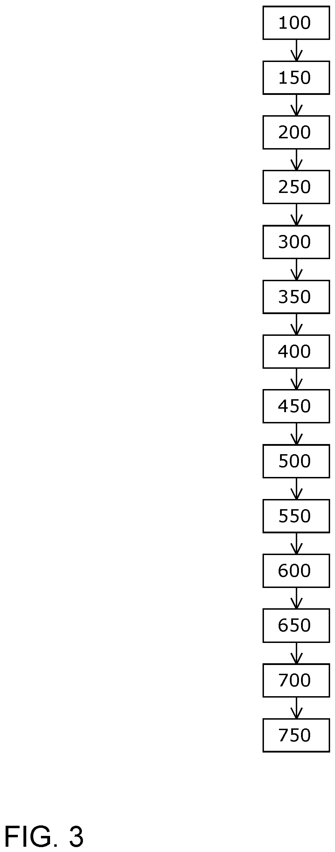

Erfindungsgemäß weist daher sowohl der vollintegrierte Geschirrspüler 1 als Haushaltsgerät 1 eine UWB-Kommunikationsschnittstelle sowie das AR-System 3 eine UWB-Kommunikationsschnittstelle auf. Dies ermöglicht die Durchführung eines erfindungsgemäßen Verfahrens gemäß des Ablaufdiagramms der Figur 3 wie folgt:
Es erfolgt zunächst ein Erfassen 100 eines Raumabschnitts mittels des AR-Systems 3, d.h. des Ausschnitts des Raums bzw. der Küchenzeile, auf welchen der Benutzer 4 gerade das AR-System 3 bzw. dessen Kamera richtet. Dann erfolgt ein Aussenden 150 eines Anfragesignals A mittels der UWB-Kommunikationsschnittstelle des AR-Systems 3 in den Raumausschnitt.

Es erfolgt ein Empfangen 200 des Anfragesignals A wenigstens seitens des vollintegrierten Geschirrspülers 1 mittels dessen UWB-Kommunikationsschnittstelle. In Reaktion auf das Empfangen 200 des Anfragesignals A erfolgt ein Aussenden 250 eines Erkennungssignals B mittels der UWB-Kommunikationsschnittstelle des vollintegrierten Geschirrspülers 1 an die UWB-Kommunikationsschnittstelle des AR-Systems 3.

Es erfolgt ein Empfangen 300 des Erkennungssignals B seitens des AR-Systems 3 mittels dessen UWB-Kommunikationsschnittstelle. Er erfolgt ferner ein Bestimmen 350 der Entfernung und der Orientierung des AR-Systems 3 zum vollintegrierten Geschirrspüler 1 mittels des empfangenen Erkennungssignals B. Nun erfolgt ein Zuordnen 400 des vollintegrierten Geschirrspülers 1 nach Entfernung und Orientierung im erfassten Raumabschnitt relativ zum AR-System 3.

Seitens des AR-Systems 3 erfolgt ferner ein Vergleichen 450 einer Erkennungsinformation des empfangenen Erkennungssignals B mit vorbestimmten Erkennungsinformationen wenigstens des vollintegrierten Geschirrspülers 1. Bei übereinstimmenden Erkennungsinformationen erfolgt ein Erkennen 500 des vollintegrierten Geschirrspülers 1 seitens des AR-Systems 3 sowie ein Einblenden 600 von gerätespezifischen Informationen des vollintegrierten Geschirrspülers 1 mittels des AR-Systems 3 am Ort des vollintegrierten Geschirrspülers 1.

Auf diese Art und Weise kann der vollintegrierte Geschirrspüler 1 trotz seiner Möbelblende 10 vom AR-System 3 erkannt, d.h. räumlich zugeordnet, werden, so dann spezifische Informationen am tatsächlichen Ort des vollintegrierten Geschirrspülers 1 im AR-System 3 für den Benutzer 4 eingeblendet werden können. Dies können wenigstens der Gerätetyp sowie der Hersteller des Geschirrspülers 1 sein. Dies können ferner Leistungsdaten sowie der Funktionsumfang des Geschirrspülers 1 sein. Zusätzlich oder alternativ kann eine Hervorhebung des vollintegrierten Geschirrspülers 1 im erfassten Raumabschnitt durch entsprechende Einblendung, beispielsweise einen farbigen Rahmen, erfolgen, um den vollintegrierten Geschirrspüler 1 bzw. dessen Position in der Küchenzeile für den Benutzer 4 besser kenntlich zu machen.

Er erfolgt ferner ein Übermitteln 550 von betriebsspezifischen Informationen vom vollintegrierten Geschirrspüler 1 an das AR-System 3. Entsprechend können beim Einblenden 600 auch betriebsspezifische Informationen des vollintegrierten Geschirrspülers 1 verwendet werden. Zu den betriebsspezifischen Informationen des vollintegrierten Geschirrspülers 1 können der grundsätzliche Betriebszustand, der Typ eines laufenden Behandlungsvorgangs sowie dessen Parametrierung gehören. Es können jedoch auch Messwerte eines laufenden Behandlungsvorgangs sowie dessen Restlaufzeit eingeblendet werden.

Ferner kann in diesem Fall die Hervorhebung des vollintegrierten Geschirrspülers 1 seitens des AR-Systems 3 unterschiedlich dargestellt werden, je nachdem, ob sich der Geschirrspüler 1 im Betrieb befindet oder nicht.

Falls das Haushaltsgerät 1 beispielsweise im Falle eines Kühlschranks (nicht dargestellt) einen Behandlungsraum (nicht dargestellt) mit wenigstens einer Bilderfassungseinheit, vorzugsweise einer Kamera, aufweist, welche auf den Behandlungsraum gerichtet ist, sowie der Behandlungsraum des Kühlschranks ferner eine Beleuchtungseinheit aufweist, welche auf den Behandlungsraum gerichtet ist, kann das Einblenden 600 der betriebsspezifischen Informationen des Kühlschranks 1 ein Einblenden 600 eines erfassten Bildes des beleuchteten Behandlungsraums umfassen.

In jedem Fall kann ferner ein Aussenden 650 eines Hinweissignals mittels der UWB-Kommunikationsschnittstelle des vollintegrierten Geschirrspülers 1 an die UWB-Kommunikationsschnittstelle des AR-Systems 3 erfolgen. Dort kann ein Empfangen 700 des Hinweissignals mittels der UWB-Kommunikationsschnittstelle des AR-Systems 3 erfolgen. Entsprechend kann ein Darstellen 750 einer Hinweisinformation mittels des AR-Systems 3 basierend auf dem empfangenen Hinweissignal erfolgen. Die Hinweisinformation kann einen vom Benutzer vorzunehmenden Schritt in einem Behandlungsablauf des Geschirrspülers 1, beispielsweise ein Öffnen der Klappe zum Trocknen des gespülten Geschirrs und bzw. oder eine vom Benutzer vorzunehmende Parametrierung in einem Behandlungsablauf des Haushaltsgeräts 1 in Form eines Induktionskochfelds (nicht dargestellt), darstellen, um beispielsweise die Leistungsstufe einer Kochstelle im Rahmen eines geführten Garprozesses zu verändern.

Dabei kann sich das Haushaltsgerät 1 beim Aussenden 650 des Hinweissignals außerhalb des Raumabschnitts befinden, welcher vom AR-System 3 in diesem Moment erfasst wird, so dass die Aufmerksamkeit des Benutzers 4 gerade dann zum Haushaltsgerät 1 gelenkt werden kann, wenn der Benutzer 4 das Haushaltsgerät 1 nicht im Blick hat.

Figur 2 zeigt eine Darstellung eines erfindungsgemäßen Systems bestehend aus einem erfindungsgemäßen Haushaltsgerät 1 in Form eines Backofens 1a sowie einem erfindungsgemäßen Haushaltsgerät 1 in Form eines Dampfgarers 1b und mehreren erfindungsgemäßen AR-Systemen 3 in Form eines Smartphones 3b und einer AR-Brille 3a zur Ausführung des erfindungsgemäßen Verfahrens.

Auch in dieser Konstellation zweier optisch sehr ähnlicher und damit optisch sehr schwierig bzw. fehleranfällig zu unterscheidender Haushaltsgeräte 1 kann die Anwendung des erfindungsgemäßen Verfahrens gemäß des Ablaufdiagramms der Figur 3 vorteilhaft sein, um den Backofen 1a vom darunter befindlichen Dampfgarer 1b zu unterscheiden und die jeweiligen Informationen wie zuvor beschrieben dem richtigen Haushaltsgerät 1 zuzuordnen und dort einzublenden.

### Bezugszeichenliste (Bestandteil der Beschreibung)

- A: Anfragesignal von AR-System 3 zu Haushaltsgerät 1
- B: (Erkennungs-)Signal von Haushaltsgerät 1 zu AR-System 3

- 1: Haushaltsgerät; Behandlungsgerät; vollintegrierter Geschirrspüler
- 1a: erstes Haushaltsgerät; Backofen
- 1b: zweites Haushaltsgerät; Dampfgarer
- 10: Möbelblenden

- 2: Küchenmöbel; Küchenschränke

- 3: AR-Systeme
- 3a: AR-Brille
- 3b: Smartphone

- 4: Benutzer

- 100: Erfassen eines Raumabschnitts mittels des AR-Systems 3
- 150: Aussenden eines Anfragesignals A des AR-Systems 3 in den Raumausschnitt
- 200: Empfangen des Anfragesignals A seitens des Haushaltsgeräts 1
- 250: Aussenden eines (Erkennungs-)Signals B des Haushaltsgeräts 1
- 300: Empfangen des (Erkennungs-)Signals B seitens des AR-Systems 3
- 350: Bestimmen der Entfernung und der Orientierung des AR-Systems 3
- 400: Zuordnen des Haushaltsgeräts 1 nach Entfernung und Orientierung
- 450: Vergleichen einer Erkennungsinformation
- 500: Erkennen 500 des Haushaltsgeräts 1 seitens des AR-Systems 3
- 550: Übermitteln von betriebsspezifischen Informationen des Haushaltsgeräts 1
- 600: Einblenden von gerätespezifischen/betriebsspezifischen Informationen
- 650: Aussenden eines Hinweissignals des Haushaltsgeräts 1
- 700: Empfangen des Hinweissignals seitens des AR-Systems 3
- 750: Darstellen einer Hinweisinformation mittels des AR-Systems 3

## Patentansprüche

1. Verfahren zur Erkennung eines Haushaltsgeräts (1) mittels eines AR-Systems (3),
wobei das Haushaltsgerät (1) eine UWB-Kommunikationsschnittstelle aufweist und
wobei das AR-System (2) eine UWB-Kommunikationsschnittstelle aufweist,
wobei das Verfahren wenigstens die Schritte aufweist:
Erfassen (100) eines Raumabschnitts mittels des AR-Systems (3),
Aussenden (150) eines Anfragesignals (A) mittels der UWB-Kommunikationsschnittstelle des AR-Systems (3) in den Raumausschnitt,
Empfangen (200) des Anfragesignals (A) wenigstens seitens des Haushaltsgeräts (1) mittels dessen UWB-Kommunikationsschnittstelle,
in Reaktion auf das Empfangen (200) des Anfragesignals (A), Aussenden (250) eines Signals (B) mittels der UWB-Kommunikationsschnittstelle des Haushaltsgeräts (1) an die UWB-Kommunikationsschnittstelle des AR-Systems (3),
Empfangen (300) des Signals (B) seitens des AR-Systems (3) mittels dessen UWB-Kommunikationsschnittstelle,
Bestimmen (350) der Entfernung und der Orientierung des AR-Systems (3) zum Haushaltsgerät (1) mittels des empfangenen Signals (B) und
Zuordnen (400) des Haushaltsgeräts (1) nach Entfernung und Orientierung im erfassten Raumabschnitt relativ zum AR-System (3).

2. Verfahren nach Anspruch 1,
wobei das Signal (B) des Haushaltsgeräts (1) ein Erkennungssignal (B) des Haushaltsgeräts (1) ist,
wobei das Verfahren ferner die weiteren Schritte nach dem Empfangen (300) des Erkennungssignals (B) aufweist:
Vergleichen (450) einer Erkennungsinformation des empfangenen Erkennungssignals (B) mit vorbestimmten Erkennungsinformationen wenigstens des Haushaltsgeräts (1) und,
bei übereinstimmenden Erkennungsinformationen, Erkennen (500) des Haushaltsgeräts (1) seitens des AR-Systems (3).

3. Verfahren nach Anspruch 2,
wobei das Verfahren ferner den weiteren Schritt nach dem Erkennen (500) des Haushaltsgeräts (1) aufweist:
Einblenden (600) von gerätespezifischen Informationen des Haushaltsgeräts (1) mittels des AR-Systems (3) am Ort des Haushaltsgeräts (1).

4. Verfahren nach Anspruch 3,
wobei die gerätespezifischen Informationen des Haushaltsgeräts (1) umfassen:
den Gerätetyp des Haushaltsgeräts (1),
den Hersteller des Haushaltsgeräts (1),
Leistungsdaten des Haushaltsgeräts (1) und/oder
den Funktionsumfang des Haushaltsgeräts (1).

5. Verfahren nach Anspruch 3 oder 4,
wobei die gerätespezifischen Informationen des Haushaltsgeräts (1) ferner umfassen:
eine Hervorhebung des Haushaltsgeräts (1) im erfassten Raumabschnitt.

6. Verfahren nach einem der vorangehenden Ansprüche,
wobei das Verfahren ferner die weiteren Schritte nach dem Empfangen (300) des Erkennungssignals (B) aufweist:
Übermitteln (550) von betriebsspezifischen Informationen vom Haushaltsgerät (1) an das AR-System (3) und
Einblenden (600) der betriebsspezifischen Informationen des Haushaltsgeräts (1) mittels des AR-Systems (3) am Ort des Haushaltsgeräts (1).

7. Verfahren nach Anspruch 6,
wobei die betriebsspezifischen Informationen des Haushaltsgeräts (1) umfassen:
einen Betriebszustand des Haushaltsgeräts (1),
den Typ eines laufenden Behandlungsvorgangs des Haushaltsgeräts (1),
eine Parametrierung eines laufenden Behandlungsvorgangs des Haushaltsgeräts (1),
einen Messwert eines laufenden Behandlungsvorgangs des Haushaltsgeräts (1) und/oder
eine Restlaufzeit eines laufenden Behandlungsvorgangs des Haushaltsgeräts (1).

8. Verfahren nach Anspruch 5 und nach Anspruch 7,
wobei sich die Hervorhebung des Haushaltsgeräts (1) bei aktiviertem Haushaltsgerät (1) von der Hervorhebung des Haushaltsgeräts (1) bei deaktiviertem Haushaltsgerät (1) unterscheidet.

9. Verfahren nach einem der Ansprüche 6 bis 8,
wobei das Haushaltsgerät (1) einen Behandlungsraum mit wenigstens einer Bilderfassungseinheit, vorzugsweise einer Kamera, aufweist, welche auf den Behandlungsraum gerichtet ist,
wobei der Behandlungsraum des Haushaltsgeräts (1) vorzugsweise ferner eine Beleuchtungseinheit aufweist, welche auf den Behandlungsraum gerichtet ist,
wobei das Einblenden (600) der betriebsspezifischen Informationen des Haushaltsgeräts (1) ein Einblenden (600) eines erfassten Bildes des, vorzugsweise beleuchteten, Behandlungsraums umfasst.

10. Verfahren nach einem der Ansprüche 2 bis 9,
wobei das Verfahren ferner die weiteren Schritte nach dem Einblenden (600) von Informationen aufweist:
Aussenden (650) eines Hinweissignals mittels der UWB-Kommunikationsschnittstelle des Haushaltsgeräts (1) an die UWB-Kommunikationsschnittstelle des AR-Systems (3),
Empfangen (700) des Hinweissignals mittels der UWB-Kommunikationsschnittstelle des AR-Systems (3) und
Darstellen (750) einer Hinweisinformation mittels des AR-Systems (3) basierend auf dem empfangenen Hinweissignal.

11. Verfahren nach Anspruch 10,
wobei die Hinweisinformation umfasst:
einen vom Benutzer vorzunehmenden Schritt in einem Behandlungsablauf des Haushaltsgeräts (1) und/oder
eine vom Benutzer vorzunehmende Parametrierung in einem Behandlungsablauf des Haushaltsgeräts (1).

12. Verfahren nach Anspruch 10 oder 11,
wobei sich das Haushaltsgerät (1) beim Aussenden (650) des Hinweissignals außerhalb des Raumabschnitts befindet, welcher vom AR-System (3) in diesem Moment erfasst wird.

13. System mit
einem Haushaltsgerät (1) mit einer UWB-Kommunikationsschnittstelle und
einem AR-System (2) mit einer UWB-Kommunikationsschnittstelle,
welche ausgebildet und eingerichtet sind, gemeinsam ein Verfahren nach einem der vorangehenden Ansprüche auszuführen.

14. Haushaltsgerät (1) mit einer UWB-Kommunikationsschnittstelle zur Verwendung in einem System nach Anspruch 13.

15. AR-System (2) mit einer UWB-Kommunikationsschnittstelle zur Verwendung in einem System nach Anspruch 13.
